Europäisches Patentamt

(19) European Patent Office

Office européen des brevets

(11) Veröffentlichungsnummer: **0 007 085**
**B1**

(12) **EUROPÄISCHE PATENTSCHRIFT**

(45) Veröffentlichungstag der Patentschrift:
**12.10.83**

(51) Int. Cl.³: **C 08 J  9/02,** C 08 L  23/08

(21) Anmeldenummer: **79102340.1**

(22) Anmeldetag: **09.07.79**

(54) **Mischpolymerisate des Äthylens und ihre Verwendung zur Herstellung von Schaumstoffen.**

(30) Priorität: **10.07.78  DE 2830328**

(43) Veröffentlichungstag der Anmeldung:
**23.01.80 Patentblatt 80/2**

(45) Bekanntmachung des Hinweises auf die Patenterteilung:
**12.10.83 Patentblatt 83/41**

(84) Benannte Vertragsstaaten:
**BE FR GB IT NL**

(56) Entgegenhaltungen:
**DE-A-1 965 588**

**CHEMICAL ABSTRACTS, Vol. 77, 1972, Columbus, Ohio, USA, Zusammenfassung Nr. 89428f**

**Die Akte enthält technische Angaben, die nach dem Eingang der Anmeldung eingereicht wurden und die nicht in dieser Patentschrift enthalten sind.**

(73) Patentinhaber: **Ruhrchemie Aktiengesellschaft, Bruchstrasse 219, D-4200 Oberhausen 13 (DE)**

(72) Erfinder: **Hobes, John Victor, Dr. Dipl.-Chem., Theodor-Storm-Strasse 4, D-4220 Dinslaken (DE)**
Erfinder: **Payer, Wolfgang, Dr. Dipl.-Chem., Zedernweg 58, D-4230 Wesel 1 (DE)**

Mischpolymerisate des Äthylens und ihre Verwendung zur Herstellung von Schaumstoffen

Die vorliegende Erfindung betrifft Mischpolymerisate des Äthylens, die zur Bildung von Schaumstoffen geeignet sind.

Geschäumte Kunststoffe finden in vielen Bereichen der Industrie Anwendung, insbesondere werden sie als Verpackungsmaterial und zur Wärme- und Schalldämmung eingesetzt. Zu ihrer Herstellung sind die verschiedensten Thermoplaste geeignet. Als Beispiele seien genannt Polyurethane, Polystyrol, Polyäthylen, Hart- und Weichpolyvinylchlorid. Diesen Kunststoffen setzt man nach einem bekannten Verfahren ein Treibmittel zu, das sich in der Schmelze des verwendeten Thermoplasten unter Gasentwicklung zersetzt und das Aufblähen der Masse, verbunden mit Porenbildung, bewirkt. Nach einer anderen bekannten Arbeitsweise wird ein Inertgas unter sehr hohem Druck im Kunststoff gelöst; anschliessend wird entspannt und durch Expansion des Gases bildet sich ein Schaumstoff.

Diese sogenannten Triebgasverfahren haben den Nachteil, dass man im allgemeinen in zwei Stufen schäumen muss. In der ersten Stufe arbeitet man mit geschlossenen, in Pressen eingesetzten Formen, in der zweiten Stufe wird bei gewöhnlichem Druck und bei einer wenig über dem Erweichungspunkt liegenden Temperatur nachgeschäumt.

In der Japanischen Patentanmeldung 71/36474 (Chemical Abstracts Vol. 77, 1972, Ref. Nr. 89 428f) ist die Herstellung von Schaumstoffen aus Thermoplasten ohne Zusatz von Treibmitteln beschrieben. Bei diesem Prozess geht man von Copolymerisaten aus, die beim Erhitzen durch Abspalten gasförmiger Zersetzungsprodukte die Schaumbildung veranlassen. Als Kunststoffe gelangen Copolymerisate des Äthylens mit einem Comonomeren wie Vinylalkohol, Vinylacetat, Vinylbutyrat, Methylacrylat oder Methacrylsäure zum Einsatz, die in Abwesenheit von Sauerstoff, d. h. unter vermindertem Druck oder in Inertgasatmosphäre auf Temperaturen erhitzt werden, bei denen eine Spaltung der Polymerisatketten noch nicht eintritt.

Dieses Verfahren hat den Nachteil, dass Schaumstoffe erhalten werden, die nur gering vernetzt sind, deren Porenstruktur wenig ausgeprägt ist und durch Variation der Zusammensetzung der Ausgangsstoffe kaum beeinflusst werden kann und deren Herstellung Reaktionszeiten von etwa 2 Stunden erfordern.

Ein Verfahren zum Verschäumen von Polymerisaten, die Ester ethylenisch ungesättigter, polymerisierbarer Säuren einpolymerisiert enthalten, beschreibt die DE-A-1 965 588. Die Ausgangsprodukte, die kein Ethylen als Baustein enthalten, stellen Polymere bzw. Copolymere dar, die mittels einer Emulsionspolymerisation hergestellt werden. Die Verschäumungstemperatur liegt vorzugsweise im Bereich von 100 bis 140°C.

Es bestand daher die Aufgabe, Thermoplaste zur Herstellung von Schaumstoffen zu entwickeln, die beim Verschäumen die Mängel der bekannten Prozesse vermeiden und die Bildung des Schaumstoffes mit technisch einfachen Mitteln ermöglichen.

Gegenstand der Erfindung sind verschäumbare Mischpolymerisate, die aus 40 bis 98 Gew.-% Äthyleneinheiten, 1 bis 30 Gew.-% Vinylalkoholeinheiten, 1 bis 30 Gew.-% Acrylsäureestereinheiten sekundärer oder tertiärer Alkohole und bis zu 2 Gew.-% Vinylacetateinheiten bestehen.

Es ist ein wesentliches Merkmal der erfindungsgemässen Mischpolymerisate, dass sie Vinylalkohol als Monomerkomponente enthalten.

Zur Herstellung dieser Polymerisate geht man von Äthylen, Vinylester und Acrylsäureester aus, die in bekannter Weise bei Drücken von 400 bis 4000 bar, vorzugsweise 1500 bis 2500 bar und Temperaturen von 110 bis 350°C, vorzugsweise 220 bis 290°C in Autoklaven oder Röhrenreaktoren zur Umsetzung gebracht werden. Um Polymerisate der ungefähren Zusammensetzung 30 bis 97,8 Gew.-% Äthylen, 1,2 bis 45 Gew.-% Vinylester und 1 bis 25 Gew.-% Acrylsäureester zu erhalten, aus denen die erfindungsgemässen Polymerisate hergestellt werden, muss wegen der unterschiedlichen Polymerisationsgeschwindigkeit der Monomeren das Monomerengemisch etwa folgende Zusammensetzung aufweisen: 40 bis 98 Gew.-% Äthylen, 1,5 bis 50 Gew.-% Vinylester und 0,5 bis 10 Gew.-% Acrylsäureester.

Die Polymerisation erfolgt in Gegenwart katalytischer Mengen radikalischer Initiatoren, z. B. Sauerstoff in Mengen von 2 bis 250 Mol/ppm, bezogen auf das zu polymerisierende Äthylen. Neben Sauerstoff können als Initiatoren auch Peroxide, wie tert.-Butylperbenzoat, Dilauroylperoxid, Di-tert.-butylperoxid oder Azo-buttersäuredinitril in Mengen von 2 bis 200 Mol/ppm, bezogen auf das Äthylen, verwendet werden. Vorteilhaft führt man die Polymerisation in Gegenwart von Moderatoren, die aliphatische Alkohole und Carbonylverbindungen, gesättigte und ungesättigte Kohlenwasserstoffe oder chlorierte Kohlenwasserstoffe und Wasserstoff durch.

Zur Überführung in das Vinylalkohol enthaltende Mischpolymerisat wird das aus Äthylen, Vinylester und Acrylsäureester bestehende Mischpolymerisat verseift. Hierzu setzt man das Polymerisat mit einer alkoholischen Lösung von Alkalihydroxid um. Alkalihydroxid kommt in einer Menge von 1 bis 5 Gew.-%, bezogen auf das eingesetzte Polymerisat, zur Anwendung. Die Reaktion erfolgt bei Temperaturen von 60 bis 120, vorzugsweise 80 bis 100°C. Die Umsetzungsdauer beträgt 100 bis 250, vorzugsweise 120 bis 180 min. Bei Einhaltung der genannten Reaktionsbedingungen bleibt der Acrylsäureester unverändert.

Erfindungsgemäss lassen sich die aus Äthylen, Vinylalkohol und Acrylsäureester bestehenden Mischpolymerisate, die noch geringe Mengen, d. h.

bis zu 2 Gew.-% unverändertes Vinylacetat enthalten, dadurch verschäumen, dass man sie 5 bis 60 min auf Temperaturen von 250 bis 350°C erhitzt. Die Dauer der Behandlungszeit ist dabei unabhängig von der gewählten Temperatur, höhere Temperaturen erfordern geringere Erhitzungszeiten als niedere Temperaturen. Dagegen ist die Dauer der Erhitzung unabhängig von der stofflichen Zusammensetzung des Mischpolymerisats.

Je nach der beabsichtigten Verwendung des Mischpolymerisats kann die thermische Behandlung innerhalb oder ausserhalb einer Form erfolgen. Um sicherzustellen, dass der Thermoplast nicht durch Oxydationsvorgänge chemisch beeinflusst wird, ist darauf zu achten, dass die Verschäumung unter Ausschluss von Sauerstoff erfolgt. Hierzu erhitzt man entweder in einer geschlossenen Form oder unter Zusatz von Inertgas.

Durch das Erhitzen wird der im Polymerisat enthaltende Acrylsäureester thermisch zu Acrylsäure und Olefin, das als Treibmittel wirkt, gespalten. Durch Variation des Acrylsäureesteranteils im Copolymerisat ist es möglich, die Porenstruktur des Schaumstoffes und damit seine Dichte zu beeinflussen. Je höher die Acrylsäureester-Konzentration im Polymerisat ist, desto geringer ist seine Dichte.

Gestalt und Grösse der Poren lassen sich weiterhin in bekannter Weise durch Abmischen des Copolymerisats mit sogenannten Keimbildnern, wie feinpulvrigen Silikaten, Zinkoxid oder Kreide regeln.

Besonders geeignet zur Herstellung von Schaumstoffen sind Acrylsäureester tertiärer Alkohole mit 4 bis 8 Kohlenstoffatomen, z. B. tert.-Butylalkohol. Mit gleichem Erfolg können auch Ester sekundärer Alkohole eingesetzt werden. Diese erfordern jedoch höhere Spalttemperaturen als die Ester tertiärer Alkohole.

Die erfindungsgemässen Schaumstoffe sind vernetzt, da beim Verschäumen Querverbindungen zwischen den Polymerketten ausgebildet werden. Sie sind daher in normalen Lösungsmitteln unlöslich und zeichnen sich durch hohe Thermostabilitäts- und Zähigkeitswerte aus.

Massgebend für den Vernetzungsgrad des Schaumstoffes ist der Anteil der Vinylalkoholeinheiten im Terpolymerisat. Je mehr Vinylalkoholeinheiten im Makromolekül enthalten sind, desto stärker ist das geschäumte Polymerisat vernetzt.

Die Schaumstoffe können in bekannter Weise als Verpackungsmaterial und zur Wärme- und Schalldämmung eingesetzt werden. Darüber hinaus eignen sie sich hervorragend als Schmelzkleber für die verschiedensten Substrate, z. B. zur Verbindung von Metall miteinander oder mit anderen Materialien wie Glas, Keramik und Kunststoff.

In den folgenden Beispielen werden die Herstellung der erfindungsgemässen Mischpolymerisate und die sich von ihnen ableitenden Schaumstoffe sowie die zu ihrer Charakterisierung herangezogenen Prüf- und Messmethoden näher beschrieben.

Beispiel 1

Die Herstellung des Äthylen/Vinylacetat/Acrylsäureester-Mischpolymerisats erfolgt in diesem, wie in den Beispielen 2 bis 4 in folgender Weise:

Die Ausgangsstoffe werden in der für die Erzeugung eines Mischpolymerisats bestimmter Zusammensetzung geeigneten Mischung unter Zusatz von Luftsauerstoff als Initiator und Propan als Reglern in einem Autoklaven bei 250°C und 2200 bar Druck polymerisiert.

Auch die Verseifung der Vinylacetat enthaltenden Mischpolymerisate zu den entsprechenden, Vinylalkohol enthaltenden Mischpolymerisaten erfolgt in den Beispielen 1 bis 4 übereinstimmend durch Umsetzung des Polymerisats mit 8%iger, alkoholischer NaOH-Lösung bei etwa 90°C (Rückfluss) in einem Reaktionsgefäss unter Rühren. Die Umsetzung ist nach 120 min beendet.

Im vorliegenden Beispiel 1 wird ein Gemisch aus
87,7 Gew.-% Ethylen
8,5 Gew.-% Vinylacetat
3,8 Gew.-% tert. Butylacrylat
zu einem Mischpolymerisat der Zusammensetzung
76 Gew.-% Ethylen
7,2 Gew.-% Vinylacetat
16,8 Gew.-% tert. Butylacrylat
polymerisiert und anschliessend verseift. Es resultiert ein Produkt, das aus
78,6 Gew.-% Ethyleneinheiten
3,6 Gew.-% Vinylalkoholeinheiten
17,3 Gew.-% tert. Butylacrylateinheiten und
0,5 Gew.-% Vinylacetateinheiten
besteht und einen $i_2$-Wert (g/10 min) von 160 und einen RSV-Wert (reduzierte spezifische Viskosität) von 0,57 hat.

Das Ethylen/Vinylalkohol/tert.-Butylacrylat-Mischpolymerisat, das noch geringe Mengen Vinylacetat enthält, wird bei 300°C in Inertgasatmosphäre 30 min thermisch behandelt. Die tert.-Butyl-acrylat-Einheiten zersetzen sich hierbei unter Abspaltung von i-Butylen. Gleichzeitig reagieren die Hydroxyl- und Carboxylgruppen intermolekular unter Bildung vernetzter Produkte, die durch das i-Butylen geschäumt werden.

Der $i_2$-Wert des Produktes der thermischen Behandlung ist nicht mehr bestimmbar.

Der Schaumstoff zeichnet sich durch hervorragende Klebeigenschaften und hohe Zähigkeit aus.

|  | Schlagzug-zähigkeit (mJ/mm²) | Schäl-festigkeit (N/mm) |
|---|---|---|
| Ausgangsprodukt geschäumtes | 900 | 0,9 |
| Endprodukt | 1500 | 2,4 |

Beispiel 2

Durch Polymerisation eines Gemisches aus
85,6 Gew.-% Ethylen

12,1 Gew.-% Vinylacetat
2,3 Gew.-% tert. Butylacrylat
wird ein Mischpolymerisat der Zusammensetzung
79,0 Gew.-% Ethylen
10,5 Gew.-% Vinylacetat
10,5 Gew.-% tert. Butylacrylat
hergestellt und anschliessend verseift. Es resultiert ein Produkt, das aus
83,0 Gew.-% Ethyleneinheiten
5,4 Gew.-% Vinylalkoholeinheiten
11,0 Gew.-% tert. Butylacrylateinheiten
0,6 Gew.-% Vinylacetateinheiten
besteht, dessen $i_2$-Wert 100 (g/10 min) ist und dessen RSV-Wert 0,70 beträgt.

Das Ethylen, Vinylalkohol, tert. Butylacrylat und gringe Mengen Vinylacetat enthaltende Mischpolymerisat wird bei 280°C in Inertgasatmosphäre 60 min thermisch behandelt.

Man erhält ein geschäumtes, vernetztes Produkt, dessen $i_2$-Wert nicht mehr bestimmt werden kann.

Der Schaumstoff zeichnet sich durch hervorragende Klebeigenschaften und hohe Zähigkeit aus. Seine Eigenschaften sind in der nachstehenden Tabelle den Eigenschaften des Ausgangsproduktes (d. h. des nicht geschäumten Polymerisats) gegenübergestellt.

| | Schlagzug-zähigkeit (mJ/mm$^2$) | Schäl-festigkeit (N/mm) |
|---|---|---|
| Ausgangsprodukt | 800 | 0,8 |
| geschäumtes Endprodukt | 1400 | 2,1 |

Beispiel 2a (Vergleich)

Durch Polymerisation eines Gemisches aus
88,6 Gew.-% Ethylen
11,4 Gew.-% Vinylacetat
wird ein Copolymerisat der Zusammensetzung
91,0 Gew.-% Ethylen
9,0 Gew.-% Vinylacetat
hergestellt, dessen MFI-Wert (190/2,16) 0,6 g/10 min beträgt.

Das Polymerisat zeigt nach 30 min Erhitzen auf 300°C unter Inertgas keine Veränderung, erst nach insgesamt 120 min Erhitzen beobachtet man schwache Schaumbildung.

Der $i_2$-Wert des thermisch behandelten Materials geht zwar auf 0,2 g/10 min zurück, doch ist nur 1% des Polymerisats vernetzt. Die Klebeigenschaften, gemessen durch die Schälfestigkeit, deren Wert 0,6 N/mm beträgt, sind gegenüber dem Ausgangsmaterial unverändert.

Beispiel 3

Durch Polymerisation eines Gemisches aus
95,8 Gew.-% Ethylen
3,6 Gew.-% Vinylacetat
0,6 Gew.-% tert. Butylacrylat
wird ein Mischpolymerisat der Zusammensetzung

95,2 Gew.-% Ethylen
2,1 Gew.-% Vinylacetat
2,7 Gew.-% tert. Butylacrylat
hergestellt und anschliessend verseift. Es resultiert ein Produkt, das aus
96,1 Gew.-% Ethyleneinheiten
1,0 Gew.-% Vinylalkoholeinheiten
2,7 Gew.-% tert. Butylacrylateinheiten
0,2 Gew.-% Vinylacetateinheiten
besteht, dessen $i_2$-Wert 2,5 (g/10 min) ist und dessen RSV-Wert 1,05 beträgt.

Das Ethylen, Vinylalkohol, tert. Butylacrylat und geringe Mengen Vinylacetat enthaltende Mischpolymerisat wird bei 280°C in Inertgasatmosphäre 60 min thermisch behandelt.

Man erhält ein geschäumtes, vernetztes Produkt, dessen $i_2$-Wert nicht mehr bestimmt werden kann.

Der Schaumstoff zeichnet sich durch hervorragende Klebeigenschaften und hohe Zähigkeit aus. Seine Eigenschaften sind in der nachstehenden Tabelle den Eigenschaften des Ausgangsproduktes (d. h. des nicht geschäumten Polymerisats) gegenübergestellt.

| | Schlagzug-zähigkeit (mJ/mm$^2$) | Schäl-festigkeit (N/mm) |
|---|---|---|
| Ausgangsprodukt | 550 | 0,2 |
| geschäumtes Endprodukt | 1225 | 1,4 |

Beispiel 4

Durch Polymerisation eines Gemisches aus
65,9 Gew.-% Ethylen
29,1 Gew.-% Vinylacetat
5,0 Gew.-% tert. Butylacrylat
wird ein Mischpolymerisat der Zusammensetzung
52,5 Gew.-% Ethylen
25,2 Gew.-% Vinylacetat
22,3 Gew.-% tert. Butylacrylat
hergestellt und anschliessend verseift. Es resultiert ein Produkt, das aus
59,6 Gew.-% Ethyleneinheiten
14,0 Gew.-% Vinylalkoholeinheiten
25,3 Gew.-% tert. Butylacrylateinheiten
1,1 Gew.-% Vinylacetateinheiten
besteht, dessen $i_2$-Wert 500 ist und dessen RSV-Wert 0,39 beträgt.

Das Ethylen, Vinylalkohol, tert. Butylacrylat und geringe Mengen Vinylacetat enthaltende Mischpolymerisat wird bei 300°C in Inertgasatmosphäre 30 min thermisch behandelt.

Man erhält ein stark geschäumtes, vernetztes Produkt, dessen $i_2$-Wert nicht mehr bestimmt werden kann.

Der Schaumstoff zeichnet sich durch hervorragende Klebeigenschaften und hohe Zähigkeit aus. Seine Eigenschaften sind in der nachstehenden Tabelle den Eigenschaften des Ausgangsproduktes (d. h. nicht geschäumtes Polymerisats) gegenübergestellt.

| | Schlagzug-zähigkeit (mJ/mm²) | Schäl-festigkeit (N/mm) |
|---|---|---|
| Ausgangsprodukt geschäumtes | 950 | 1,0 |
| Endprodukt | 2300 | 3,2 |

Prüf- und Messmethoden

1. Schälfestigkeit

Die Bestimmung der Schälfestigkeit erfolgt mit einer Zwick-Zerreissmaschine (vertikale Bauart), in deren Spannbacken die um 90° abgewinkelten Flächen (30 × 100 mm²) eines Verbundsystems Stahlblech-Schaumstoff-Stahlblech eingespannt werden. Die eigentliche Klebfläche (70 × 100 mm²) steht hierbei senkrecht zu den Spannbacken. Die Zuggeschwindigkeit beträgt 50 mm/min. Die auftretenden Reiss- bzw. Schälkräfte werden mittels eines Schreibers registriert.

2. Schlagzugzähigkeit (DIN 53448)

Als Probekörper dient eine 1 mm starke Platte, die mit einem Pendelschlagwerk geschlagen wird. Man misst die verbrauchte Schlagarbeit (mJ/mm²) im Normalklima von 23°C und 50% relativer Luftfeuchte.

3. Schmelzindex-Messung ($i_2$-Wert; Din 53735)

Die Messungen werden mit einem Prüfgerät «Z 465» der Fa. Zwick & Co. bei Temperaturen von 190°C und einem Auflagedruck von 2,16 kg durchgeführt. Die durch eine Düse von 2,095 mm Ø und 8 mm Länge ausgestossene Menge in g, wird auf eine Durchlaufzeit von 10 min bezogen.

4. Messung der reduzierten «spezifischen» Viskosität (RSV-Wert)

Die reduzierte Viskosität ist definiert als Quotient von spezifischer Viskosität und Konzentration der Lösung. Die Bestimmung erfolgt anhand von Lösungen des Probematerials in Dekalin (0,025 g/100 ml Lösungsmittel) mit einem Ubbelohde-Kapillarviskosimeter. Das Auflösen des Probematerials in Dekalin und die Viskositätsmessung werden bei 100°C ± 0,2°C vorgenommen.

**Patentansprüche**

1. Verschäumbare Mischpolymerisate aus 40 bis 98 Gew.-% Äthyleneinheiten, 1 bis 30 Gew.-% Vinylalkoholeinheiten, 1 bis 30 Gew.-% Acrylsäureestereinheiten sekundärer oder tertiärer Alkohole und bis zu 2 Gew.-% Vinylacetateinheiten.

2. Verschäumbare Mischpolymerisate nach Anspruch 1, dadurch gekennzeichnet, dass die Acrylsäureestereinheiten als Alkoholkomponente tertiäre Alkohole mit 4 bis 8 Kohlenstoffatomen enthalten.

3. Verfahren zum Verschäumen der Mischpolymerisate nach Anspruch 1 und 2, dadurch gekennzeichnet, dass die Mischpolymerisate unter Ausschluss von Sauerstoff 5 bis 60 min auf 250 bis 350°C erhitzt werden.

**Claims**

1. Foamable copolymers of 40 to 98% by weight of ethylene units, 1 to 30% by weight of vinyl alcohol units, 1 to 30% by weight of acrylic acid ester units of secondary or tertiary alcohols and up to 2% by weight of vinyl acetate units.

2. Foamable copolymers according to claim 1, characterized in that the acrylyc acid ester units contain tertiary alcohols having 4 to 8 carbon atoms as alcohol moiety.

3. A process for foaming the copolymers according to claims 1 and 2, characterized in that the copolymers are heated for 5 to 60 minutes to 250 to 350°C in the absence of oxygen.

**Revendications**

1. Copolymères gonflables en mousses consistant en 40 à 98% en poids de motifs d'éthylène, 1 à 30% en poids de motifs d'alcool vinylique, 1 à 30% en poids de motifs d'esters acryliques d'alcools secondaires ou tertiaires et jusqu'à 2% en poids de motifs d'acétate de vinyle.

2. Copolymères gonflables en mousses selon la revendication 1, caractérisés en ce qu'ils contiennent comme motifs d'esters acryliques des motifs d'esters acryliques d'alcools tertiaires en $C_4$–$C_8$.

3. Procédé pour le gonflement en mousses de copolymères selon la revendication 1 ou 2, caractérisé en ce que les copolymères sont chauffés à l'abri de l'oxygène à 250–350°C pendant 5 à 60 minutes.